# EUROPEAN PATENT SPECIFICATION

(11) **EP 0 777 074 B1**
(45) Date of publication and mention of the grant of the patent: **24.01.2001**
(21) Application number: 96307568.4
(22) Date of filing: 18.10.1996
(51) Int. Cl.: F16K 17/04, F16L 55/07

(54) **Improvements in or relating to relief valves**
Verbesserungen an Druckentlastungsventilen
Perfectionnements apportés aux vannes de détente

(30) Priority: 30.10.1995 GB 9522152
(43) Date of publication of application: 04.06.1997
(73) Proprietor: Draeger Limited, Blyth, Northumberland NE24 4RG (GB)
(72) Inventor: Van Hall, Maurice, Bedlington, Northumberland (GB)
(74) Representative: Overbury, Richard Douglas

(56) References cited:
- DE-A- 2 165 179
- GB-A- 2 107 809
- US-A- 2 852 034
- US-A- 4 077 429

## Description

This invention relates to a relief valve and more particularly is concerned with an in-line relief valve.

Generally, when using pipes or hoses to convey compressed gas or other fluid, it is necessary to ensure that the pressure does not exceed a certain level.

DE-A-2165179, which forms a basis for the preamble of claim 1, describes a safety valve suitable for connection to a pressure line, and having an inlet which can be connected to the pressure line, an outlet leading to an exterior, and an interposed valve seat which is closeable by a pre-stressed valve plate.

It is an object of the present invention to provide a valve having a novel pressure relief mechanism.

According to the present invention there is provided an in-line relief valve for use with a fluid, such as compressed breathable gas, characterised in that it comprises a tubular member fixed in a bore provided in a body, so that fluid can flow from the bore and through the tubular member, wherein the bore has a cross-sectional dimension greater than the cross-sectional dimension of the tubular member so that a gap is provided between the outer surface of the tubular member and the inner surface of the bore and a seal is provided downstream of said gap adapted to close said gap at lower fluid pressures and to allow fluid to vent through said gap at higher fluid pressures.

For a better understanding of the invention and to show the same may be carried into effect, reference will now be made, by way of example, to the accompanying drawings in which:-
Figure 1 is a sectional view of a first embodiment of a relief valve in accordance with the present invention, and
Figure 2 is a sectional view through a second embodiment of a relief valve in accordance with the present invention.

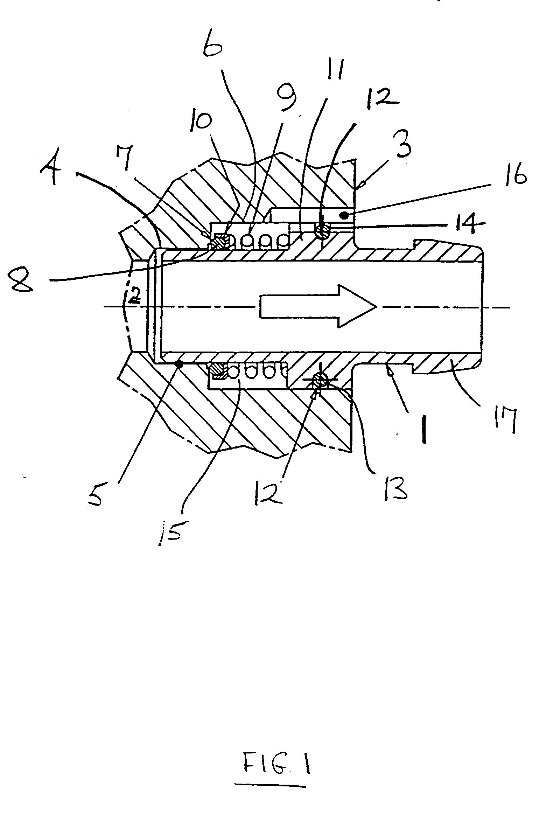

Referring to Figure 1, there is shown a valve comprising a tubular member 1 for location in a bore 2 in a body 3. The bore 2 includes a portion 4 having a cross section which includes a dimension greater than the corresponding dimension of the tubular member 1. Thus, in the embodiment shown, the outer diameter of the tubular member 1 is somewhat less than the diameter of the bore portion 4 so that a gap 5 is provided between the wall of the bore portion 4 and the outer surface of the tubular member 1. The bore 2 includes, adjacent to and downstream of bore portion 4, another bore portion 6 of increased diameter with a stepped shoulder 7 provided between the two bore portions. An O-ring 8 is mounted on the outer surface of the tubular member 1 adjacent to the stepped shoulder 7. The O-ring 8 is longitudinally displaceable with respect to the tubular member 1 between a first position adjacent to the stepped shoulder 7 in which it closes said gap and a second position in which it is spaced from said gap. The O-ring 8 is urged into contact with the stepped shoulder 7 by a spring 9. Thus the O-ring 8 is downstream of the gap 5. The O-ring 8 is nested in a cup washer 10 loosely fitted to the outer surface of the tubular member 1. One end of the spring 9 acts on the cup washer 10 and the other end of the spring 9 acts on a flange portion 11 on the outer surface of the tubular member 1. The sealing face 7 is stepped so as to minimise the opening tolerances and the opening pressure.

The tubular member is retained in the bore 2 by means of a staple pin comprising a pair of limbs 12 linked together at one of their ends to form a generally U-shaped member. The limbs 12 pass through holes 14 in the body 3 and lie in a circumferential groove 13 provided in the outer surface of the flange portion 11. In this way, the valve can be rapidly connected to, and disconnected from, the bore in the body 3.

A chamber 15 is thus defined by the bore portion 6 and the outer surface of the tubular member 1 and a channel 16 is provided to link the chamber 15 with the atmosphere.

The tubular member 1 terminates in a tail piece including an enlarged portion 17 to facilitate the connection of a hose or pipe (not shown). Tension can be applied to the hose or pipe without loss of pressure or of flow.

In use, compressed air or other fluid under pressure flows along bore 2, through the tubular member 1 and thence along the hose or pipe connected thereto. The force exerted by the spring 9 is such that, at normal working pressures, the O-ring 8 is sealingly seated against the stepped shoulder 7 and prevents fluid passing through the gap 4 and into the chamber 15 and thence to the atmosphere. However, if the fluid in bore 2 is at a higher pressure exceeding a predetermined pressure (determined by the area between the step of shoulder 7 and the outer surface of the tubular member 1 and the force exerted by the spring 9) the O-ring 8 is caused to lift off the stepped shoulder 7 against the action of spring 9 whereby a part of the fluid can pass into chamber 15 via gap 4 and vent to the atmosphere via channel 16, whilst the remaining fluid can continue to flow through the tubular member 1.

Instead of or additional to the channel 16, fluid can vent from the chamber 15 via a slot (not shown) provided in the flange portion 11 or by ensuring that a clearance is provided between the tubular member 1 and the wall of the bore portion 6.

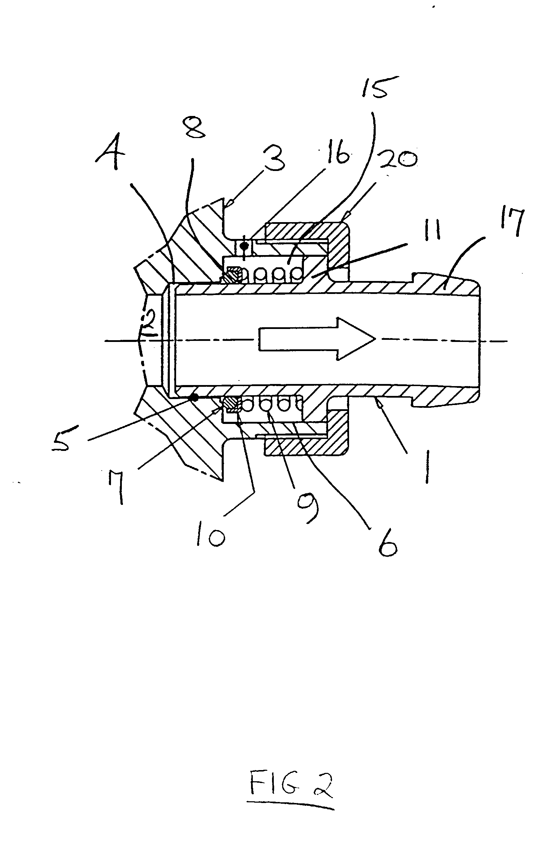

Referring now to Figure 2, parts corresponding to parts of Figure 1 are denoted by the same reference numerals. In this case, the bore portion 6 is defined by a cylindrical protrusion on the body 3 and an external screw thread is provided on the outer surface of the protrusion. The valve is retained on the body 3 by means of a cap 20 which includes an internal screw thread threadingly engaged with the external screw thread of the protrusion and which bears on the flange portion 11. Also, in this case, the cap 20 assists in retaining the pipe or hose (not shown) on the tail piece of the tubular member 1. As in the previous embodiment a substantial pulling force can be exerted on the hose or pipe without loss of pressure or of fluid flow.

## Claims

1. An in-line relief valve for use with a fluid, such as compressed breathable gas, characterised in that it comprises a tubular member (1) fixed in a bore (2) provided in a body (3), so that fluid can flow from the bore (2) and through the tubular member (1),
wherein the bore (2) has a cross-sectional dimension greater than the cross-sectional dimension of the tubular member (1) so that a gap (5) is provided between the outer surface of the tubular member (1) and the inner surface of the bore (2) and
a seal (8) is provided downstream of said gap (5) adapted to close said gap (5) at lower fluid pressures and to allow fluid to vent through said gap (5) at higher fluid pressures.

2. An in-line relief valve according to claim 1, in which the seal (8) is longitudinally displaceable with respect to the tubular member (1) between a first position in which it closes said gap and a second position in which it is spaced from said gap, the seal being resiliently biased towards the first position.

3. An in-line relief valve according to claim 1 or 2, in which the bore has a first bore portion (4), a second bore portion (6) of larger cross-sectional dimension than the first bore portion and a stepped shoulder (7) between the first and second portions (4,6), said seal (8) being in contact with the stepped shoulder (7) at lower fluid pressures to close said gap (5) .

4. An in-line relief valve according to claim 3, in which the seal (8) is urged against the stepped shoulder (7) by a spring (9).

5. An in-line relief valve according to claim 3 or 4, in which said gap (5) is provided between said first bore portion (4) and said tubular member (1).

6. An in-line relief valve according to any preceding claim, in which the tubular member (1) is fixed inside the bore (2) by means of a U-shaped staple pin (12) passing through holes (1) provided in the body (3) and engaging with a flange (13) provided on the tubular member (1).

7. An in-line relief valve according to any preceding claim in which a channel (16) is provided in the body (3), such that at said higher pressures fluid passes through said gap (5) and vents through said channel (16).

## Patentansprüche

1. Inline-Sicherheitsventil zum Gebrauch mit einem Fluid, beispielsweise komprimiertem atembarem Gas, dadurch gekennzeichnet, dass es ein rohrförmiges Teil (1) enthält, das in einem Loch (2) befestigt ist, das sich in einem Körper (3) befindet, so dass Fluid aus dem Loch (2) durch das rohrförmige Teil (1) fließen kann, wobei
der Querschnitt des Lochs (2) größer bemessen ist als der Querschnitt des rohrförmigen Teils (1), so dass ein Spalt (5) zwischen der Außenfläche des rohrförmigen Teils (1) und der Innenfläche des Lochs (2) entsteht, und
eine Dichtung (8) stromabwärts des Spalts (5) bereitgestellt ist, die so eingerichtet ist, dass sie den Spalt (5) bei geringen Fluiddrücken verschließt und bei höheren Fluiddrücken dem Fluid erlaubt, durch den Spalt (5) auszuströmen.

2. Inline-Sicherheitsventil nach Anspruch 1, bei dem die Dichtung (8) bezüglich des rohrförmigen Teils (1) in Längsrichtung verschiebbar ist zwischen einer ersten Stellung, in der sie den Spalt verschließt, und einer zweiten Stellung, in der sie Abstand zum Spalt hat, wobei die Dichtung elastisch in die erste Stellung vorgespannt ist.

3. Inline-Sicherheitsventil nach Anspruch 1 oder 2, wobei das Loch einen ersten Lochabschnitt (4) aufweist, einen zweiten Lochabschnitt (6), dessen Querschnitt größer bemessen ist als der Querschnitt des ersten Lochabschnitts, und eine gestufte Schulter (7) zwischen dem ersten Abschnitt (4) und dem zweiten Abschnitt (6), und die Dichtung (8) bei geringen Fluiddrücken die gestufte Schulter (7) berührt, damit der Spalt (5) verschlossen ist.

4. Inline-Sicherheitsventil nach Anspruch 3, wobei eine Feder (9) die Dichtung (8) gegen die gestufte Schulter (7) drückt.

5. Inline-Sicherheitsventil nach Anspruch 3 oder 4, wobei der Spalt (5) zwischen dem ersten Lochabschnitt (4) und dem rohrförmigen Teil (1) bereitgestellt ist.

6. Inline-Sicherheitsventil nach irgendeinem vorhergehenden Anspruch, wobei das rohrförmige Teil (1) im Loch (2) mittels eines u-förmigen Haltestifts (12) befestigt ist, der durch Löcher (14) verläuft, die im Körper (3) bereitgestellt sind, und in einen Flansch (13) eingreift, mit dem das rohrförmige Teil (1) versehen ist.

7. Inline-Sicherheitsventil nach irgendeinem vorhergehenden Anspruch, wobei der Körper (3) mit einem Kanal (16) versehen ist, so dass das Fluid bei höheren Drücken den Spalt (5) durchläuft und durch den Kanal (16) ausströmt.

## Revendications

1. Soupape de décharge raccordée en série, destinée à être utilisée avec un fluide, tel qu'un gaz comprimé de respiration, caractérisée en ce qu'elle comporte un organe tubulaire (1) fixé dans un trou (2) formé dans un corps (3), afin que le fluide puisse circuler depuis le trou (2) dans l'organe tubulaire (1),
dans laquelle le trou (2) a une dimension en coupe supérieure à la dimension en coupe de l'organe tubulaire (1) afin qu'un espace (5) soit formé entre la surface externe de l'organe tubulaire (1) et la surface interne du trou (2), et
un joint d'étanchéité (8) est placé en aval dudit espace (5) et est destiné à fermer cet espace (5) à des pressions relativement faibles du fluide et à permettre au fluide de s'échapper par cet espace (5) à des pressions plus élevées du fluide.

2. Soupape de décharge raccordée en série selon la revendication 1, dans laquelle le joint d'étanchéité (8) est mobile longitudinalement par rapport à l'organe tubulaire (1) entre une première position dans laquelle il ferme ledit espace et une seconde position dans laquelle il est à distance dudit espace, le joint d'étanchéité étant rappelé élastiquement vers la première position.

3. Soupape de décharge raccordée en série selon la revendication 1 ou 2, dans laquelle le trou a une première partie (4) de trou, une seconde partie (6) de trou de plus grande dimension en coupe que la première partie de trou, et un épaulement (7) formant un gradin entre la première et la seconde partie (4, 6), le joint d'étanchéité (8) étant au contact de l'épaulement (7) formant le gradin à des pressions relativement faibles du fluide afin que ledit espace (5) soit fermé.

4. Soupape de décharge raccordée en série selon la revendication 3, dans lequel le joint d'étanchéité (8) est repoussé contre l'épaulement (7) formant le gradin par un ressort (9).

5. Soupape de décharge raccordée en série selon la revendication 3 ou 4, dans lequel ledit espace (5) est placé entre la première partie (4) de trou et l'organe tubulaire (1).

6. Soupape de décharge raccordée en série selon l'une quelconque des revendications précédentes, dans laquelle l'organe tubulaire (1) est fixée dans le trou (2) par une broche de calage (12) passant dans des orifices (1) formés dans le corps (3) et coopérant avec un flasque (13) formé sur l'organe tubulaire (1).

7. Soupape de décharge raccordée en série selon l'une quelconque des revendications précédentes, dans laquelle un canal (16) est formé dans le corps (3), afin que le fluide aux pressions relativement élevées passe dans ledit espace (5) et soit évacué par ledit canal (16).
